(19) Europäisches Patentamt
European Patent Office
Office européen des brevets

(11) **EP 3 017 562 B1**

(12) **EUROPEAN PATENT SPECIFICATION**

(45) Date of publication and mention
of the grant of the patent:
**21.08.2019 Bulletin 2019/34**

(51) Int Cl.:
*H04L 9/32* (2006.01)    *H04L 29/04* (2006.01)
*H04L 29/06* (2006.01)    *H04L 29/08* (2006.01)

(21) Application number: **13888778.1**

(22) Date of filing: **01.07.2013**

(86) International application number:
**PCT/CN2013/078612**

(87) International publication number:
**WO 2015/000120 (08.01.2015 Gazette 2015/01)**

(54) **A METHOD AND APPARATUS FOR ANONYMOUS AUTHENTICATION ON TRUST IN SOCIAL NETWORKING**

VERFAHREN UND VORRICHTUNG FÜR VERTRAUENSBASIERTE ANONYME AUTHENTIFIZIERUNG IN SOZIALEN NETZWERKEN

PROCÉDÉ ET APPAREIL D'AUTHENTIFICATION ANONYME DE CONFIANCE DANS DES RÉSEAUX SOCIAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.05.2016 Bulletin 2016/19**

(73) Proprietor: **Nokia Technologies Oy
02610 Espoo (FI)**

(72) Inventor: **YAN, Zheng
Xi'an
Shaanxi 710071 (CN)**

(74) Representative: **Seppo Laine Oy
Porkkalankatu 24
00180 Helsinki (FI)**

(56) References cited:
**CN-A- 1 937 496     US-A1- 2009 249 451**

• ZHEN-WEI YU ET AL: "A trust evaluation approach of P2P nodes based on trust computing", COMMUNICATION TECHNOLOGY (ICCT), 2010 12TH IEEE INTERNATIONAL CONFERENCE ON, IEEE, PISCATAWAY, NJ, USA, 11 November 2010 (2010-11-11), pages 1088-1091, XP031849672, ISBN: 978-1-4244-6868-3
• XIAOLIANG WANG ET AL: "CST: P2P Anonymous Authentication System Based on Collaboration Signature", FUTURE INFORMATION TECHNOLOGY (FUTURETECH), 2010 5TH INTERNATIONAL CONFERENCE ON, IEEE, PISCATAWAY, NJ, USA, 21 May 2010 (2010-05-21), pages 1-7, XP031688360, ISBN: 978-1-4244-6948-2

**Description**

FIELD OF THE INVENTION

The present invention generally relates to social communications. More specifically, the invention relates to anonymous authentication on trust in social networking.

BACKGROUND

The modern communications era has brought about a tremendous expansion of communication networks. Communication service providers and device manufacturers are continually challenged to deliver value and convenience to consumers by, for example, providing compelling network services, applications, and contents. The development of communication technologies has contributed to an insatiable desire for new functionalities. Through a communication system such as Mobile Ad Hoc Network (MANET), a social group could be instantly formed by not only people socially connected, but also strangers physically in proximity for conducting instant social activities. This kind of instant social networking is an essential complement for the Internet social networking, and can be very valuable for mobile users, especially when Internet or mobile cellular networks are temporarily unavailable or costly to access. Trust plays an important role in social networking for reciprocal activities among strangers. It helps people overcome perceptions of uncertainty and risk and engages in "trust-related behaviors". During the instant and on-line social activities (for example, Pervasive Social Networking (PSN)), users are not necessarily acquaintances but more likely strangers. Meanwhile, the users also would like to preserve their personal information (such as personal identifiers) during social networking over communication networks for the purpose of safety.

Therefore the users need to balance between benefits received in such reciprocal activities and risks related to communicating with strangers.

In this context, it is desirable to authenticate trust among communication parties without knowing their real identities, and at the same time ensure the trustworthiness of authentication in an anonymous way in order to achieve both privacy and security protection. Herein, the term "anonymous trust authentication" or "anonymous authentication on trust" refers to authenticating the trust value of a system entity without disclosing or knowing its identity.

Document "A Trust Evaluation Approach of P2P Nodes Based on Trust Computing", by Zhen-wei Yu et al., IEEE 2010, discloses a trust model in a P2P network, wherein a public key - private key pair is generated in connection with a Join operation. Document "CST: P2P Anonymous Authentication System based on Collaboration Signature", by Xiaoliang Wang et al., IEEE 2010, discloses an anonymous authentication system for P2P networks, where a key pair is generated randomly.

SUMMARY

The present description introduces a flexible authentication solution to support trustworthy social networking by authenticating node trust in an anonymous manner.

According to a first aspect of the present invention, there is provided a method comprising issuing trust information to a first node from among a plurality of nodes, from a network entity, wherein the trust information indicates a trust evaluation for the first node, wherein the trust information and a trust list are used for an anonymous trust authentication between the first node and a second node from among the plurality of nodes, the plurality of nodes being registered in the network entity, distributing, by the network entity, the trust list to the plurality of nodes comprising at least the first node and the second node, wherein the trust list is associated with the trust evaluation for the first node and a trust evaluation of the second node, the trust evaluations each being associated with an authentication code and a trust value, and the anonymous trust authentication being based on one-off pairs of public key and private key, the pairs being generated from the trust evaluation for the first node, wherein authenticity of the public key of the pairs is verified using the trust evaluations in the trust list.

According to a second aspect of the present invention, there is provided a method comprising obtaining respective trust information from a network entity, wherein the trust information from the network entity indicates a trust evaluation for a first node by the network entity, the trust evaluation comprising an authentication code and a trust value, generating security information for the first node based at least in part on the trust evaluation for the first node, and sending a message with authentication information to a second node from the first node, the first and second nodes being registered in the network entity, wherein the authentication information is associated with the security information and used for an anonymous trust authentication between the first node and the second node, wherein the generated security information comprises a one-off pair of public key and private key; and wherein the trust evaluation is suitable for verifying authenticity of the public key of the pair.

According to a third aspect of the present invention, there is provided a computer program product comprising a computer-readable medium bearing computer program code embodied therein for use with a computer, the computer program code comprising: code for performing a method according to the first or second aspect.

According to a fourth aspect of the present invention, there is provided an apparatus comprising: issuing means for performing a method according to the first or second aspect.

According to exemplary embodiments, the network entity may comprise: a Trusted Server (TS) with which the plurality of nodes is registered, or a third node as an Authorized Party (AP) registered with the TS. In an exemplary embodiment, the trust evaluation for the first node may be associated with an authentication code and a trust value of the first node. For example, the trust value of the first node may be evaluated by the network entity independently, or by the network entity and one or more other network entities cooperatively. In an exemplary embodiment, the trust list may comprise an aggregated list of trust evaluations certified by the network entity. The trust evaluations in the aggregated list may be ordered based at least in part on trust values associated with the trust evaluations. Optionally, the trust evaluations in the aggregated list may be associated with trust values within a range specified for the network entity.

In exemplary embodiments of the present invention, the provided methods, apparatus, and computer program products can provide a secure yet anonymous and trustworthy authentication for social networking, which guarantees node safety and preserves node privacy. Moreover, the proposed solution can flexibly support anonymous authentication on trust (or anonymous trust authentication) in social networking in a centralized or a distributed way or both.

BRIEF DESCRIPTION OF THE DRAWINGS

The invention itself, the preferable mode of use and further objectives are best understood by reference to the following detailed description of the embodiments when read in conjunction with the accompanying drawings, in which:

Fig.1 is a flowchart illustrating a method for anonymous trust authentication, which may be performed at a network entity as an AP in accordance with embodiments of the present invention;

Fig.2 is a flowchart illustrating a method for anonymous trust authentication, which may be performed at a first node as a message sender in accordance with embodiments of the present invention;

Fig.3 is a flowchart illustrating a method for anonymous trust authentication, which may be performed at a second node as a message receiver in accordance with embodiments of the present invention;

Fig.4 shows an exemplary system structure in accordance with an embodiment of the present invention;

Fig.5 shows an exemplary procedure of anonymous trust authentication in accordance with an embodiment of the present invention;

Fig.6 shows an exemplary procedure of anonymous trust authentication in accordance with another embodiment of the present invention;

Fig.7 shows an exemplary procedure of anonymous trust authentication in accordance with still another embodiment of the present invention; and

Fig.8 is a simplified block diagram of various apparatuses which are suitable for use in practicing exemplary embodiments of the present invention.

DETAILED DESCRIPTION OF THE INVENTION

The embodiments of the present invention are described in details with reference to the accompanying drawings. Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Furthermore, the described features, advantages, and characteristics of the invention may be combined in any suitable manner in one or more embodiments. One skilled in the relevant art will recognize that the invention may be practiced without one or more of the specific features or advantages of a particular embodiment. In other instances, additional features and advantages may be recognized in certain embodiments that may not be present in all embodiments of the invention.

In recent years, an autonomous communication network such as MANET has received significant attention due to capabilities of establishing an instant communication in many time-critical and mission-critical applications. It has a good prospect of becoming a practical platform for instant social activities. For example, the platform for social activities can provide daily digests of group purchase activities to users, help people with similar driving routes to share car riding, and suggest a list of music festivals to users near the event locations. A user could chat with strangers nearby for instant social needs, such as seeking groups for purchase, ride sharing or other social events. Meanwhile, with the rapid development of mobile Internet, a mobile device has many chances to connect to the Internet, such as at home or a working office or even in public places. Mobile Internet can work together with the self-organized ad hoc networks to offer advanced services and applications for mobile users. As one of the advanced services and applications for mobile users, Pervasive Social Networking (PSN) can support social networking via the Internet or a self-organized ad hoc network in an intelligent and context-aware manner.

During the instant and on-line social activities (for example PSN), users are not necessarily acquaintances but more likely strangers. In this context, it is important to authenticate trust among communication parties for securing PSN. An ideal way of PSN is that nodes can authenticate trust levels with each other without knowing real node identifiers. Anonymous authentication on trust values can greatly benefit mobile users for not only preserving their privacies, but also ensuring trustworthy social networking. If the nodes can authenticate the trust levels with each other without knowing the real node identifiers, they can easily make a decision even though they have no idea about who is the counterpart of communications. Another ideal requirement is both the anonymity of a message originator and traceability by an authority can be assured in case that a dispute needs to be judged and solved. Thus it is desirable to propose an anonymous trust authentication method for authenticating trust in order to secure PSN and assist user to make decisions in various social activities and at the same time preserve user privacy, especially identity privacy.

On the other hand, for preserving node user privacy, pseudonyms are often applied for nodes in social networking in order to hide their real identities and avoid malicious privacy tracking. However, adopting and frequently changing pseudonyms badly influence the efficiency of node authentication and key management, as well as trust management. This is because every time the pseudonym changes, a new public-private key pair may have to be generated and certified by an authorized party for later authentication and verification. Moreover, a trust value evaluated according to an old pseudonym needs to be at least mapped to a new one; otherwise the system would easily suffer Sybil attack. Particularly, for supporting trustworthy in PSN, the trust value evaluated by an authorized party for a node generally needs to be issued if a new pseudonym is applied to the node. It is essentially required to efficiently authorize and authenticate a trust level together with the new pseudonym of the node.

In general, the pseudonym-based approach is an idea to help nodes communicate without revealing their real identities. However, the computation cost of signature and certificate verification grows linearly with the load of communications if applying this approach, since every message comprises a public key, a certificate on the public key and a signature using its private key essentially. The public-private key pair needs to be updated each time the node pseudonym is changed, thus the computation load increases linearly with the number of pseudonyms applied. Some schemes propose using a centralized party based authentication to reduce the burden of nodes in MANET, while others propose independent MANET node based authentication. Both the schemes suffer with scalability and message loss problems, as any one entity (such as a node or a centralized party) is solely responsible for key generation and/or verification. This leads to scalability issues when the PSN communication density goes high and the scale of PSN is big. Therefore, how to achieve efficient and anonymous authentication on node trust in order to preserve privacy and enhance trustworthy social networking is a challenge.

In accordance with exemplary embodiments of the present invention, a novel solution is proposed to support trustworthy social networking by authenticating node trust in an anonymous manner. In the proposed flexible authentication solution, one or more Authorized Parties (APs), which may comprise a centralized Trusted Server (TS), at least one social networking node, or a combination thereof, are applied to issue an evaluated trust value to a node.

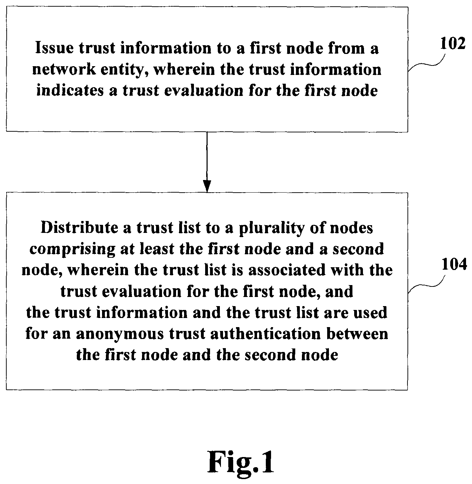

Fig.1 is a flowchart illustrating a method for anonymous trust authentication, which may be performed at a network entity as an AP in accordance with embodiments of the present invention. For example, the network entity may comprise a trusted service platform, a central manager or a TS that is authorized for social networking participated by a plurality of nodes. Alternatively or additionally, the network entity may comprise a social networking node (such as an access point, a base station or a mobile device) acting as an AP. In an exemplary embodiment, the node acting as the AP may be more stable and reliable than other nodes. The method illustrated in Fig.1 may be applicable to a communications network such as MANET, PSN system, mesh network, Peer-to-Peer network and any other mobile network suitable for instant or on-line social activities. It is needed for the nodes participating in the instant or on-line social activities to be authenticated with each other for secure social communications. The network entity, as an AP in social communications, may provide identity and trust management for the registered nodes (such as a first node, a second node and any other nodes participating in social networking), which may exchange messages with each other during the social communications.

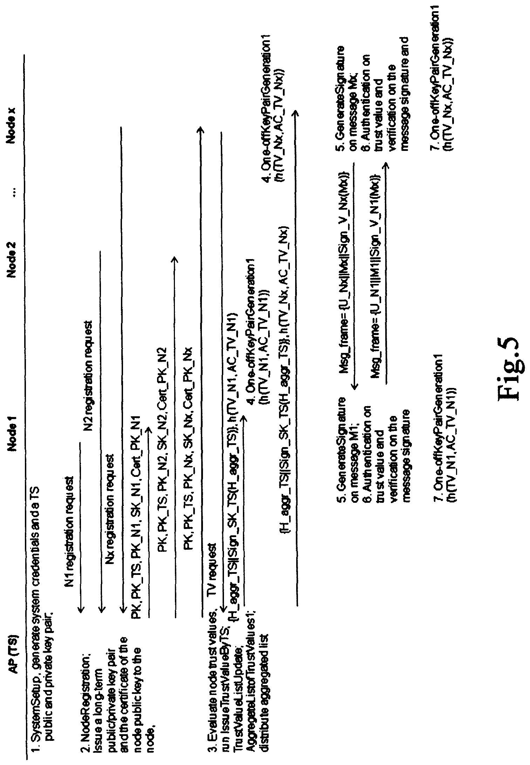

According to exemplary embodiments, the network entity may issue trust information to a first node, as shown in block 102 of Fig.1, and the trust information may indicate a trust evaluation for the first node. For example, the trust evaluation for the first node may be associated with an authentication code and a trust value of the first node. In an exemplary embodiment, the trust evaluation for the first node may comprise an integrated value (for example, a hash value or any other unique value reflecting trustworthiness of the first node) generated from the authentication code and the trust value of the first node. The trust value of the first node may be evaluated by the network entity independently, or by the network entity and one or more other network entities cooperatively. In an exemplary embodiment, the trust information may further indicate one or more parameters for trust authentication, such as a validity period of the trust value of the first node, a secret between the network entity and the first node, system credentials and/or registration parameters as illustrated in combination with Figs.5-7. The trust information may be issued to the first node from the network entity in response to a request from the first node (for example, a request for querying or updating a current trust value), a trigger event (for example, in an event that the current trust value is expired or could be greatly changed) or a trigger time (for example, when a predetermined time for issuing arrives). According to exemplary embodiments, the network entity may comprise: a TS with which a plurality of nodes participating in social networking is registered, or a third node as an AP registered with the TS. Therefore, in case that the TS is not available, the nodes such as the first node and the second node can also communicate with each other for social networking based at least in part on an anonymous authentication on trust by applying one or more nodes (such as the third node) as APs. In an exemplary embodiment, the TS may issue the trust information (for example, indicating an initial trust evaluation) to the first node, when the first node registered at the TS with its real identity or identifier (ID), and the first node may obtain some registration parameters and/or system credentials in addition to the trust evaluation. Alternatively or additionally, the network entity (such as TS or a node acting as an AP) may check the validity period of the current trust value of the first node, and if it will be expired or the first node requests, then the network entity may generate a new trust evaluation for the first node. Nodes can continue participating in the social communications by requesting respective new trust values from the network entity when their old trust values are expired, for example, using their respective session keys with the network entity. For issuing the trust information to the first node, a mutual authentication process may be initiated between the network entity and the first node. For example, this process can be achieved by adopting a Diffie-Hellman key agreement protocol secured with a public key based signature scheme. It will be realized that the network entity can create and issue respective trust information for other nodes in a similar way to the first node. For example, the network entity can issue trust information to the second node for indicating a trust evaluation associated with an authentication code and a trust value of the second node, and update the trust evaluation for the second node as required.

In block 104 of Fig.1, the network entity may distribute a trust list to a plurality of nodes comprising at least the first node and the second node, wherein the trust list may be associated with the trust evaluation for the first node, and the trust information and the trust list can be used for an anonymous trust authentication between the first node and the second node. According to an exemplary embodiment, the trust list distributed or broadcast by the network entity may be further associated with other trust evaluations by the network entity for corresponding nodes in social networking. The trust list can be updated based at least in part on a change of trust values evaluated by the network entity, so that the trust list is associated with the trust values not expired. For example, when the network entity generates a new trust value for a node, it appends the new trust value and its authentication code in the trust list. Similarly, when a trust value reaches its expiry time, the trust value and its authentication code will be cut off from the trust list. According to exemplary embodiments, the trust list can be distributed by the network entity to the plurality of nodes participating in social networking, in response to a predefined event (for example, once a new update of the trust list is done) or a predefined time (for example, when a new distribution or broadcasting period starts). In an exemplary embodiment, the trust list may comprise an aggregated list of trust evaluations certified by the network entity. Particularly, the trust evaluations in the aggregated list may be ordered based at least in part on trust values associated with the trust evaluations, for example, in an ascending or descending order. Thus, it is easy to compare a trust value of one node to another according to the positions of trust evaluations in the list during authentication, and there is no need to know the concrete trust values. In another exemplary embodiment, the trust evaluations in the aggregated list may be associated with trust values within a range specified for the network entity. For example, the network entity could only certify for the nodes whose trust values are above a predefined threshold in order to enhance trustworthy social networking. In this case, the network entity only authorizes good nodes with sufficient trust levels to do social networking. According to an exemplary embodiment, the network entity can hash respective trust evaluations for the plurality of nodes, aggregate them all and sign the aggregated list of those hashed trust evaluations using its private key.

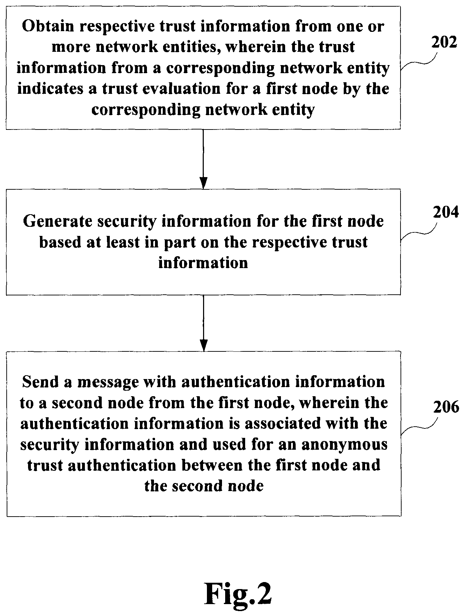

Fig.2 is a flowchart illustrating a method for anonymous trust authentication, which may be performed at a first node as a message sender in accordance with embodiments of the present invention. For example, the first node may comprise a mobile station, a user equipment, a wireless terminal, a personal digital assistant (PDA), a portable device, or any other entities participating in social networking. The first node may conduct social networking by exchanging messages with one or more other nodes (such as a second node). It will be appreciated that although the first node is illustrated as a message sender in connection with Fig.2, it also can receive and authenticate messages sent from other nodes during social networking communications. The first node can communicate with the network entity (such as a TS or a social networking node acting as an AP) in a secure way. For example, the first node may register at the TS with its real ID and obtain some registration parameters and/or system credentials by applying a secure protocol (for example, via Secure Sockets Layer (SSL) or any other suitable protocol for encrypting information over the Internet or cellular networks). Alternatively or additionally, the first node may communicate with one or more other nodes acting as APs to get authentication credentials.

Corresponding to the description with respect to Fig.1, the first node can obtain respective trust information from one or more network entities as shown in block 202 of Fig.2, and the trust information from a corresponding network entity may indicate a trust evaluation for the first node by the corresponding network entity. According to exemplary embodiments, the one or more network entities may comprise: a TS with which a plurality nodes (comprising at least the first node and a second node) in social networking are registered, at least one third node as an AP registered with the TS, or a combination thereof. As illustrated in connection with Fig.1, the trust evaluation for the first node may be associated with an authentication code and a trust value of the first node. In case that there are multiple network entities (for example, three network entities comprising the TS and two third nodes acting as APs) co-existing in a social network and generating corresponding trust evaluations for the first node respectively, the first node would obtain these corresponding trust evaluations (for example, three trust evaluations generated respectively by the TS and the two third nodes) in the respective trust information from the network entities.

Based at least in part on the respective trust information, security information for the first node can be generated as shown in block 204. Then in block 206, a message with authentication information is sent to the second node from the first node, wherein the authentication information may be associated with the security information and used for an anonymous trust authentication between the first node and the second node. In an exemplary embodiment where the first node obtains its trust information merely from one network entity, the security information may comprise a pair of one-off public and private keys of the first node. Accordingly, the authentication information may be associated with: the one-off public key of the first node, and a signature generated by using the one-off private key of the first node. For example, the first node can generate its one-off public/private key pair randomly from a trust evaluation indicated by the obtained trust information for secure social communications, sign its message with the one-off private key and use the one-off public key as a temporary identifier. This one-off public/private key pair can be updated by selecting a distinct random number to regenerate a new pair of keys, and the update (for example, frequency and/or time of the update) may be controlled according to a privacy policy of the first node. Optionally, the first node can use different key pairs for respective messages sent to the second node for achieving more advanced privacy. Similarly, messages sent from the first node to other nodes can be secured with corresponding distinct key pairs.

In another exemplary embodiment where the first node obtains corresponding trust information from multiple network entities respectively, the security information may comprise multiple pairs of one-off public and private keys of the first node. Accordingly, the authentication information may be associated with: the one-off public keys of the first node, and a signature aggregated from multiple signatures which are generated by using the one-off private keys of the first node. For example, with respect to the trust information obtained from a corresponding network entity, the first node can generate a pair of one-off public/private keys randomly from the indicated trust evaluation, and since different trust evaluations for the first node can be obtained in case of multiple network entities, the first node can generate multiple pairs of one-off public/private keys for secure social communications. Then the first node can sign its message with these one-off private keys respectively and use these one-off public keys as a temporary identifier (for example, in an aggregation way). Similarly, these key pairs can be updated respectively by selecting a distinct random number and the update may be controlled according to the privacy policy of the node. The individual signatures on the message with the one-off private keys can be aggregated together to one signature (for example, according to bilinear maps or any other suitable aggregation scheme). Particularly, the length of the aggregated signature may be the same as that of any of the individual signatures.

In still another exemplary embodiment where the first node obtains corresponding trust information from multiple network entities respectively, the security information may comprise a pair of one-off public and private keys of the first node. Accordingly, the authentication information may be associated with: the one-off public key of the first node, and a signature generated by using the one-off private key of the first node. For example, an aggregated trust evaluation may be generated from those trust evaluations for the first node issued by the multiple network entities. Then the first node can generate its one-off public/private key pair randomly from the aggregated trust evaluation, sign its message with the one-off private key and use the one-off public key as a temporary identifier. Similarly, this one-off public/private key pair can be updated by selecting a distinct random number, and the update may be controlled according to the privacy policy of the first node.

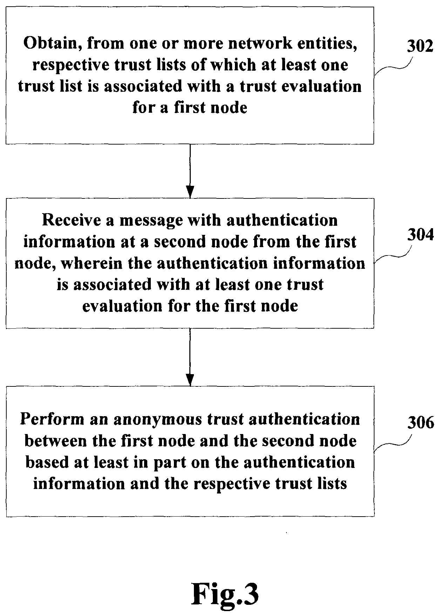

Fig.3 is a flowchart illustrating a method for anonymous trust authentication, which may be performed at a second node as a message receiver in accordance with embodiments of the present invention. For example, the second node may comprise a mobile station, a user equipment, a wireless terminal, a PDA, a portable device, or any other entities participating in social networking. The second node may conduct social networking by exchanging messages with one or more other nodes (such as the first node). It will be appreciated that although the second node is illustrated as a message receiver in connection with Fig.3, it also can send messages to be authenticated to other nodes during social networking communications. Similar to the first node, the second node also can communicate with the network entity in a secure way, for example, register at the TS with its real ID and obtain some registration parameters and/or system credentials by applying a secure protocol, and/or communicate with one or more other nodes acting as APs to get authentication credentials.

Corresponding to the descriptions with respect to Fig.1 and Fig.2, from one or more network entities (such as the TS and/or at least one third node as an AP registered with the TS), the second node can obtain respective trust lists of which at least one trust list is associated with a trust evaluation for a first node, as shown in block 302 of Fig.3. As illustrated in connection with Fig.1, a trust list distributed by a corresponding network entity may be associated with multiple trust evaluations by the corresponding network entity for a plurality of nodes in a social network. For example, the trust list distributed by the corresponding network entity may comprise an aggregated list of trust evaluations certified by the corresponding network entity. The trust evaluations in the aggregated list can be ordered based at least in part on trust values associated with the trust evaluations. In particular, the trust evaluations in the aggregated list may be associated with trust values within a range specified for the corresponding network entity. In this case, different rights may be assigned to the network entities in the social network to issue different trust levels. For example, a first network entity can issue trust values for the nodes whose trust levels are above level 1 but below level 2, a second network entity can issue trust values for the nodes whose trust levels are above level 2 but below level 3, and so on. As such, a trust level of the first node can be verified based at least in part on the respective obtained trust lists. In an exemplary embodiment, the trust level of the first node can be reflected by the position of the trust evaluation for the first node in a trust list, and/or the trust value range specified for a trust list from the corresponding network entity. In an exemplary embodiment, some trust lists obtained at the second node may not be associated with the trust evaluation for the first node, considering that the trust value of the first node may be out of the specified ranges for corresponding network entities distributing these trust lists. Alternatively, in case that all of the network entities as APs in the social network evaluate the trust value of the first node and append the trust evaluation for the first node to their respective trust lists, each of the trust lists obtained at the second node may be associated with the corresponding trust evaluation for the first node.

From the first node, the second node can receive a message with authentication information that may be associated with at least one trust evaluation for the first node, as shown in block 304. Based at least in part on the authentication information and the respective trust lists, an anonymous trust authentication between the first node and the second node can be performed in block 306. In accordance with exemplary embodiments, the anonymous trust authentication may comprise a verification of whether the trustworthiness of the first node is certified by a network entity and whether the received message is from the first node. As described in combination with Fig.2, the authentication information may be associated with: one or more one-off public keys of the first node, and a signature generated by using one or more one-off private keys corresponding to the one or more one-off public keys. Accordingly, the anonymous trust authentication between the first node and the second node may be performed by: verifying authenticity of the one or more one-off public keys based at least in part on the respective trust lists; and verifying the signature based at least in part on the one or more one-off public keys. For example, when the second node receives the message sent from the first node, the second node can verify the authenticity of the one or more one-off public keys of the first node by finding corresponding trust evaluations or equivalents thereof from the respective trust lists published by the one or more network entities, since the existence of a trust evaluation inside a trust list is in order for performing trust verification. Once the genuineness of the trust evaluation associated with the received message is confirmed, the second node can undergo signature verification for the corresponding one or more one-off public keys. Optionally, the second node can combine signatures on the trust lists obtained from different network entities into a single signature whose length is the same as that of any of the individual signatures. Therefore, the efficiency of verification on the signatures can be greatly improved at the second node. It is noted that the anonymous trust authentication in accordance with exemplary embodiments can be performed by batch verification. In batch verification, distinct messages from different nodes can be collectively verified by a receiver. This may be supported by the bilinear maps. Thus, the performance of trust authentication and signature verification can be significantly improved.

The various blocks shown in Figs.1-3 may be viewed as method steps, and/or as operations that result from operation of computer program code, and/or as a plurality of coupled logic circuit elements constructed to carry out the associated function(s). The schematic flow chart diagrams described above are generally set forth as logical flow chart diagrams. As such, the depicted order and labeled steps are indicative of specific embodiments of the presented methods. Other steps and methods may be conceived that are equivalent in function, logic, or effect to one or more steps, or portions thereof, of the illustrated methods. Additionally, the order in which a particular method occurs may or may not strictly adhere to the order of the corresponding steps shown.

The solution provided by the present invention can enable a flexible authentication mechanism to support trustworthy social networking by authenticating node trust in an anonymous manner. According to an exemplary embodiment, an AP (such as a centralized TS or a PSN node) is applied to evaluate and issue a trust value to a node in a social network. According to the issued trust value and its authentication code, the node can generate its one-off public/private key pair for secure social communications, for example by signing its message with the one-off private key and using the one-off public key as a temporary identifier. This key pair can be updated according to the privacy policy of the node. In particular, the trust value and its authentication code can be integrated as a unique value (named an integrated trust value) as a trust evaluation for the node. One node is impossible to know another node's authentication code thus it cannot impersonate another node. On the other hand, an up-to-date aggregated list of integrated trust values certified by the AP can be distributed in the social network. The orders of the integrated trust evaluations in the aggregated list may be arranged based at least in part on their respective trust values. Thus it is easy to compare the trust value of one node to another according to the positions of the integrated trust values in the list during authentication and there is no need to know the concrete trust value, especially batch verification on a number of messages from different nodes. In an exemplary embodiment, the AP could only certify for the nodes whose trust values are above a threshold in order to enhance trustworthy social networking. In this case, the AP only authorizes good nodes with sufficient trust levels to do social networking. Using the aggregated list of integrated trust values, a node as a message receiver can authenticate the trust value issued by the AP for a node as a message sender and verify a signature of the message to do anonymous trust authentication, without knowing the real node identifier of the sender. The aggregated list of integrated trust values can be updated and distributed by the AP periodically or by request if needed, for example, when one or more trust values are re-evaluated by the AP.

In an exemplary embodiment, the proposed solution also supports multiple APs to co-exist in the social network. It is practical that more than one AP could evaluate and issue trust values (for example, in the form of integrated trust values) to corresponding nodes, especially in the case of online, mobile or pervasive social networking. In addition, the multiple APs would distribute or broadcast their respective up-to-date aggregated lists of integrated trust values in the social network. According to the issued trust evaluations (such as integrated trust values associated with the corresponding trust values and authentication codes) from the multiple APs, a node can generate its one-off public/private key pairs (for example, based at least in part on the integrated trust values from different APs, respectively) for secure social communications, sign its message with the one-off private keys and use the one-off public keys as a temporary identifier. The signatures on the message with these one-off private keys can be aggregated together to one signature. These key pairs also can be updated according to the privacy policy of the node. Another possible scheme applicable to the case of multiple APs is that all of the issued trust evaluations for a node from the multiple APs can be integrated as a unique value. The node can generate its one-off public/private key pair according to this unique value, sign its message with the one-off private key and use the one-off public key as a temporary identifier. In this case, the node as the message receiver can optionally combine signatures of the up-to-date aggregated lists of integrated trust values from different APs into a single signature whose length is the same as that of any of the individual signatures. Therefore, the efficiency of verification on the signatures can be greatly improved at the receiver. Moreover, super-distribution of certified lists of integrated trust values via MANET in PSN can be also efficiently supported.

According to an exemplary embodiment, the proposed solution allows the multiple APs to be assigned with different rights to issue different levels of trust. For example, the right of an AP can be specified in the TS's certificate on the AP, thus the nodes in the social network can authenticate the AP's right. For example, AP1 can only issue trust values for the nodes whose trust levels are above level 1 but below level 2, AP4 can issue trust values for the nodes whose trust levels are above level 4 but below level 5. In this way, it is easy for a node in the social network to know trust levels of other nodes by checking the certificate of the AP that provides an aggregated list of integrated trust values. It is noted that the AP can be played by some local nodes, such as base stations, access points (such as wireless local area network access points) or mobile devices. All the APs can collaborate together for a more accurate trust evaluation on a node in social networking and for achieving conditional traceability for solving disputes.

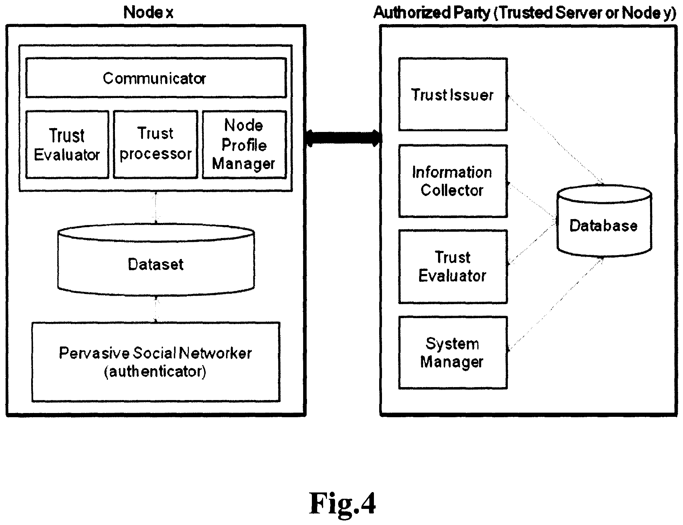

Fig.4 shows an exemplary system structure in accordance with an embodiment of the present invention. Although Fig.4 merely illustrates the system structure in the context of PSN, it will be realized that the solution proposed in accordance with exemplary embodiments also can be applied into any other system suitable for social networking. Fig.4 exemplarily shows a PSN system which involves two different kinds of entities: PSN nodes (such as Node x shown in Fig.4), which may interact with each other for instant or on-line social communications; and a network entity (such as Authorized Party (AP) shown in Fig.4), which may comprise a centralized Trusted Server (TS) or a PSN node like Node y. For example, the TS may have functionalities and capabilities that the PSN nodes do not have, and be trustworthy to provide identity and trust managements for the PSN nodes. In addition to the TS, some system entities can play as an AP, for example, some PSN nodes (such as access points, base stations or mobile devices) that are more stable and reliable than other nodes. The AP can collect sufficient information to conduct accurate trust evaluations. As integrity and/or privacy are crucial for some social communications, it is important to authenticate node trust in an anonymous way to ensure trustworthy communications and preserve user privacy. To save computation resources and processing burdens, the PSN nodes may resort to the centralized TS through mobile Internet to manage identities, keys and trust relationships for securing PSN communications in various situations. In case that the TS is not available, the PSN nodes also can communicate with each other for social networking through an anonymous authentication on trust by applying some PSN nodes as APs.

In the system structure illustrated in Fig.4, a node (denoted as Node x in Fig.4) may comprise a pervasive social networker, a communicator, a trust evaluator, a trust processor, a dataset and a node profile manager. In accordance with exemplary embodiments, the pervasive social networker (for example, a set of PSN applications such as Facebook mobile client, etc.) can provide a user interface for a user of the node to do social networking. For the pervasive social networker, one of its important functions may be to authenticate trust values from other nodes during PSN communications. The communicator can communicate with the AP in a secure way by applying a secure protocol (for example via SSL). Particularly, the communicator can request and receive a trust value and its authentication code (for example, as an integrated trust value) from the AP. Within the PSN system, the AP can distribute an up-to-date aggregated list of integrated trust values with its certification. The trust evaluator can evaluate the trust value for a node, for example, according to the issued trust value and locally accumulated information and knowledge. The trust processor can process the trust list distributed by the AP and generate a one-off public-private key pair based at least in part on the current integrated trust value of the node. The dataset may store data related to the functional modules/elements/units at the node in a secure manner. In addition, the node profile manager can be used to maintain personal information of the user. For example, the node profile manager can communicate with the TS to register the node into the trust management system and manage various credentials for the node.

The AP illustrated in Fig.4 may comprise a trust evaluator, a trust issuer, an information collector, a system manager and a database. In accordance with exemplary embodiments, the trust evaluator can assess trust values for corresponding nodes (if needed by cooperating with one or more other APs), and identify malicious nodes. The trust issuer can manage trust values, generates their respective authentication codes and issue the integrated trust values to the corresponding nodes periodically or by request. On the other hand, the trust issuer can distribute or broadcast a list of integrated trust values to nodes within the PSN system periodically or by request. The information collector can communicate with one or more nodes, for example, collect and process social information or data from the nodes, and save the processed data into the database at the AP. In the case that the TS operates as the AP, the system manager can handle node registration, and manage system keys and credentials. The database can save respective trust values of a plurality of nodes and other information needed for AP execution. It can be understood that the database at the TS also can save each registered node's real ID and its long term key pair, system credentials, etc. The system structure and various components shown in Fig.4 are only illustrative and not intended to suggest any limitation as to the scope of use or functionality of embodiments of the invention described herein. It could be understood that the system and the corresponding functionalities illustrated in Fig.4 may be implemented by adding, deleting or replacing some components with respective to those shown in Fig.4, or by combining or sub-dividing functionalities of those components.

Figs.5-7 show various exemplary procedures of anonymous authentication on trust in accordance with exemplary embodiments of the present invention. For participating in PSN activities, PSN nodes may register with a TS which is authorized for the PSN before joining in the PSN. For example, the TS may be in charge of checking respective identities and providing security keys (such as a long-term public/private key pair) for the registered nodes. In addition, the TS may set up system parameters for these nodes, which may be preloaded with a public key according to a specified system scheme. Table 1 summarizes some notions used for exemplarily illustrating the procedures of system setup and message authentication between PSN nodes.

Table 1: Notation Description

| Notation | Description | Usage |
|---|---|---|
| PK | The system public key shared among all system entities | PK may comprise a set of system credentials |
| PK_TS | The public key of TS | |
| SK_TS | The corresponding private key of TS | |
| Nx | Node x, where x is natural number | Used for denoting any PSN node |
| Ny | Node y, where y is natural number | Used for denoting any PSN node acting as AP |
| s | The secret between TS and a node | |
| s_Ny | The secret between Node y and other nodes | |
| PK_Nx | The long term public key of Nx | Used for authentication between TS and node Nx |
| SK_Nx | The corresponding long term private key of PK_Nx | |
| TV_Nx | The short-lived trust value of Nx issued by TS | |

(continued)

| Notation | Description | Usage |
|---|---|---|
| T_TV_Nx | The validity period of TV_Nx issued by TS | |
| AC_TV_Nx | The authentication code of TV_Nx issued by TS | |
| Cert_PK_Nx | The TS's certificate on Nx's long-term public key | Used for authentication between TS and node Nx |
| TV_U_Nx | The short-lived trust value of Nx issued by Node y | |
| T_TV_U_Nx | The validity period of TV_U_Nx issued by Node y | |
| AC_TV_U_Nx | The authentication code of TV_U_Nx issued by Node y | |
| U_Nx | The one-off public key of Nx | |
| V_Nx | The one-off private key of Nx | |
| K | The session key between a node and TS | |
| h(.) | A one way hash function, for example, SHA-1 | |
| H(.) | A Map-to-Point hash function, for example, H: $\{0,1\}^* \to G1$ | G1 is an additive group of prime order q |
| H_aggr_TS | The up-to-date aggregated list of integrated trust values issued by TS | For example, H_aggr_TS = {h(h(TV_N1, AC_TV_N1)), h(h(TV_N2, AC_TV_N2)), ..., h(h(TV_Nx, AC_TV_Nx)), ...} |
| H_aggr_Ny | The up-to-date aggregated list of integrated trust values issued by Node y | For example, H_aggr_Ny = {h(h(TV_U_N1, AC_TV_U_N1)), h(h(TV_U_N2, AC_TV_U_N2)), ..., h(h(TV_U_Nx, AC_TV_U_Nx)), ...} |
| f(.) | An aggregation function to combine the integrated trust values such as h(TV_Nx, AC_TV_Nx) and/or h(TV_U_Nx, AC_TV_U_Nx) in order to generate a one-off key pair based at least in part on the trust values issued by multiple APs | |

As shown in Figs.5-7, the procedures of system setup and anonymous trust authentication in PSN may involve several algorithms and/or processes, for example, comprising but not limit to the processes of SystemSetup, NodeRegistration, IssueTrustValueByTS, IssueTrustValueByNode, AggregateListofTrustValues, One-OffKeyPairGeneration, SignatureGeneration, AggregateSignature, Verification, and/or TrustValueListUpdate, in accordance with exemplary embodiments. During the process of SystemSetup at the TS, one or more system keys and/or credentials may be generated and respective system entities (such as Node 1, Node 2, Node x, Node y and so on) can be preloaded with the system keys and/or credentials at registration. The system keys and/or credentials may comprise system public key, for example PK = {G1, G2, q, P}, which is shared among all system entities (such as the TS and registered nodes), where G1 denotes an additive group of prime order q, G2 denotes a multiplicative group of the same order, P is a generator of G1, and ê: $G1 \times G1 \to G2$ represents a bilinear mapping between G1 and G2. The system may be initiated by generating a public/private key pair for the TS. The public key of TS (such as PK_TS) may be provided to each registered node (such as Node 1, Node 2, Node x, Node y and so on), and the TS keeps secret the corresponding private key (such as SK_TS) and a system master private key by itself. In the process of NodeRegistration, a PSN node can be registered at the TS with its real ID, for example Nx for Node x. The TS may generate and issue a long term public and private key pair (such as PK_Nx and SK_Nx) to the PSN node during its registration, for example, according to a secure protocol. Meanwhile, the TS also can provide a certificate (such as Cert_PK_Nx) on the node's public key signed by it, and issue a corresponding initial integrated trust value to the registered node.

In the process of IssueTrustValueByTS, the TS may check the validity period of a current trust value of a node (such as Nx) issued by the TS, if it will be expired or the node requests, the TS may evaluate a trust value, generate and issue a new trust value for this node with an authentication code, for example, as an integrated trust value h(TV_Nx, AC_TV_Nx) of Nx in order to make the integrated trust value unique. For issuing the trust value, the node may send its long-term public key certificate (such as Cert_PK_Nx) which was signed by the TS and a random number (such as r1) to the TS, in order to initiate a mutual authentication process. For example, after authenticating PK_Nx from Cert_PK_Nx, the TS may choose r2 as its share to establish a shared session key (such as K) between Nx and TS. This process can be achieved by adopting a Diffie-Hellman key agreement protocol secured with a public key based signature scheme. Besides, the TS can send trust information (such as {h(TV_Nx, AC_TV_Nx), T_TV_Nx, s, Q=sP}, where T_TV_Nx is the expiration time of TV_Nx) comprising some related parameters to this node.

Considering that a PSN node (such as Ny) can also play as an AP, in the process of IssueTrustValueByNode, the node Ny acting as an AP can evaluate a trust value of another node (such as Nx), generate and issue the evaluated trust value to the another node. In this case, the node Ny can identify a node with its temporary identifier (such as U_Nx for Nx, which may be provided by Nx, for example, during a previous session between Nx and Ny). The issued trust value can be expressed as TV_U_Nx, and h(TV_U_Nx, AC_TV_U_Nx) denotes the integrated trust value generated for Nx, which is a unique value from the view of the issuer node Ny. For issuing this trust value, Ny may send its long-term public key certificate (such as Cert_PK_Ny which was signed by the TS) and a random number r1' to Nx, in order to initiate a mutual authentication process. After authenticating PK_Ny from Cert_PK_Ny, Nx can choose r2' as its share to establish a shared session key between Nx and Ny. This process can be achieved by adopting a Diffie-Hellman key agreement protocol secured with a public key based signature scheme. Besides, Ny can send trust information (such as {h(TV_U_Nx, AC_TV_U_Nx), T_TV_U_Nx, s_Ny, Q'=s_Ny·P}, where T_TV_U_Nx is the expiration time of TV_U_Nx) comprising some related parameters to Nx. In this case, Nx can also be authenticated with Cert_PK_Nx by Ny if the privacy requirement of Nx is not stringent.

With one or more issued trust values, the node can generate corresponding anonymous one-off public/private keys in the process of One-OffKeyPairGeneration (for example, One-OffKeyPairGenerationl for the case of one AP such as TS or Ny, or One-OffKeyPairGeneration2 for the case of multiple APs), in order to send PSN messages to other nodes. For example, after getting an integrated trust value h(TV_Nx, AC_TV_Nx) from the TS, the node Nx can generate an anonymous one-off public/private key pair (which may be denoted as U_Nx and V_Nx respectively) randomly in the process of One-OffKeyPairGenerationl. The one-off public key U_Nx may comprise U1_Nx and U2_Nx, where U1 and U2 are cipher texts of the ElGamal encryption algorithm. Similarly, the one-off private key V_Nx may comprise V1_Nx and V2_Nx. In an exemplary embodiment, the key pair generation corresponding to the process of One-OffKeyPairGenerationl may be performed by inputting i=h(TV_Nx, AC_TV_Nx) from the TS and outputting the one-off anonymous public/private key pair U_Nx and V_Nx. For example, the one-off public key U_Nx can be computed as:

$$U1\_Nx \; = \; i \cdot a \cdot P \qquad\qquad (1)$$

$$U2\_Nx \; = \; h(i) \oplus H(i \cdot a \cdot Q) \qquad\qquad (2)$$

where h(·) represents a one way hash function and H(·) represents a Map-to-Point hash function as shown in Table 1, parameter "a" is a random nonce, parameters "P" and "Q" are credentials as described with respect to the processes of SystemSetup, IssueTrustValueByTS and IssueTrustValueByNode, and symbol "⊕" represents an XOR operation. Accordingly, the corresponding one-off private key V_Nx can be computed as:

$$V1\_Nx \; = \; s \cdot U1\_Nx \qquad\qquad (3)$$

$$V2\_Nx \; = \; s \cdot H(U1\_Nx \; \| \; U2\_Nx) \qquad\qquad (4)$$

where parameter "s" represents the secret between TS and Nx, and symbol "‖" represents a concatenation operation. The above computations may be conducted at Nx after getting the integrated trust value from the TS and when Nx needs to communicate with another node using a new key pair. Similarly, for an integrated trust value h(TV_U_Nx, AC_TV_U_Nx) obtained from another node (such as Ny) acting as the AP, Nx also can randomly generate an anonymous one-off public/private key pair in the process of One-OffKeyPairGenerationl, for example, by replacing parameters corresponding to TS with suitable parameters corresponding to Ny in the above equations. In order to generate unique key pairs for respective messages, the random nonce "a" can be changed each time the node generates a one-off public/private key pair. Thus, even for the same parameter "i", it is possible to generate different key pairs for achieving more advanced privacy, for example, using different key pairs for respective messages sent out in PSN. The node can balance between computation cost and its privacy demand.

For the case that multiple APs issue evaluated trust values to Nx in the system, Nx also can generate anonymous one-off public/private keys by using a set of integrated trust values (which may be denoted as {h(TV_U_Nx, AC_TV_U_Nx)}) comprising those issued by the multiple APs, in order to send PSN messages to other nodes. According to an exemplary embodiment, after aggregating the set of integrated trust values from the multiple APs, for example, through combining these integrated trust values according to an aggregation function such as f({h(TV_U_Nx, AC_TV_U_Nx)}), Nx can generate an anonymous one-off public/private key pair (denoted as U_Nx and V_Nx respectively) randomly in the process of One-OffKeyPairGeneration2 by using the aggregated result of these integrated trust values, in a similar way to the process of One-OffKeyPairGeneration1. In an exemplary embodiment, the key pair generation corresponding to the process of One-OffKeyPairGeneration2 may be performed by inputting an aggregated parameter i=f({h(TV_U_Nx, AC_TV_U_Nx)}) to some specified key pair generation equations (for example, the equations as described with respect to the process of One-OffKeyPairGeneration1, with suitable parameters applied for the corresponding APs), and outputting the anonymous one-off public/private key pair U_Nx and V_Nx. Alternatively, the process of One-OffKeyPairGeneration1 may be performed at the node Nx once for each of the obtained integrated trust values. As such, multiple pairs of one-off public/private keys of Nx can be generated.

In an exemplary embodiment where Nx obtains the integrated trust values from not only the TS but also other nodes such as Ny, similar computations on anonymous one-off public/private keys can be conducted at Nx when it needs to communicate with another node using a new key pair. For example, the process of One-OffKeyPairGeneration1 may be performed at Nx once for each of the obtained integrated trust values. In this case, multiple pairs of one-off public/private keys of Nx can be generated. Alternatively, the process of One-OffKeyPairGeneration2 may be performed at Nx with respect to the aggregated result of the integrated trust values obtained from both the TS and the other nodes, so as to generate a pair of one-off public/private keys of Nx.

When the node wants to send a message, it may compute a signature on the message using the one-off private key in the process of SignatureGeneration. For example, the node Nx can compute a signature Sign_V_Nx on message Mx using its one-off private key V_Nx = (V1_Nx, V2_Nx) in such a way that Sign_V_Nx(Mx) = V1_Nx·Mx+V2_Nx. Then Nx sends Mx to one or more other nodes, for example, with a message frame format as: {U_Nx ∥ Mx ∥ Sign_V_Nx(Mx)}. In case of multiple pairs of public/private keys of Nx, a number of signatures may be generated correspondingly. According to an exemplary embodiment, these signatures can be combined together into one signature in the process of AggregateSignature (for example, by applying an aggregation scheme) for efficient super-distribution and verification and reducing communication and storage costs. The result of this aggregation is an aggregated signature whose length is the same as that of any of the individual signatures. The aggregation scheme can be applied to aggregate those lists of integrated trust values signed by multiple APs, or the message signatures by a node using its one-off private keys generated from the trust values issued by different APs.

In the process of AggregateListofTrustValues1 according to an exemplary embodiment, the TS may periodically distribute or broadcast an aggregated list of hashes of issued trust values and authentication codes to the PSN nodes. For example, the TS may first hash the integrated trust values not expired, such as h(h(TV_Nx, AC_TV_Nx)) for Nx, aggregate them all, such as H_aggr_TS = {h(h(TV_N1, AC_TV_N1)), h(h(TV_N2, AC_TV_N2)), ..., h(h(TV_Nx, AC_TV_Nx)), ...}, and then sign the aggregated hashes using its private key (such as SK_TS) and output the signed list as {H_aggr_TS ∥ Sign_SK_TS(H_aggr_TS)}. In the process of AggregateListofTrustValues2 according to another exemplary embodiment, an AP such as Ny may periodically distribute an aggregated list of hashes of issued trust values and authentication codes to the PSN nodes. For example, the AP may first hash the integrated trust values not expired, such as h(h(TV_U_Nx, AC_TV_U_Nx)) for Nx, aggregate them all, such as H_aggr_Ny = {h(h(TV_U_N1, AC_TV_U_N1)), h(h(TV_U_N2, AC_TV_U_N2)), ..., h(h(TV_U_Nx, AC_TV_U_Nx)), ...}, and then sign the aggregated hashes using its long-term private key (such as SK_Ny) and output the signed list as {H_aggr_Ny ∥ Sign_SK_Ny(H_aggr_Ny)}.

The PSN node can continue participating in the PSN communications when its old trust value is expired, by requesting a new trust value from an AP using its session key (which may be different in respective communication sessions) with the AP. When issuing a new trust evaluation (such as an integrated trust value associated with a trust value and its authentication code) to the node, the AP may append the new trust evaluation at a right position in the aggregated list of integrated trust values in the process of TrustValueListUpdate. Similarly, when a trust evaluation reaches its expiry time, it would be cut off from the aggregated list. The up-to-date aggregated list can be distributed to each PSN node from the AP once a new update is done.

When a node receives messages sent from other nodes, the node as a receiver can verify the authenticity of the one-off public keys in the process of Verification, from the aggregated list of integrated trust values published by the AP. For example, when receiving a message from the node Nx, the receiver first computes the integrated trust value hash of a one-off public key U_Nx (which can be extracted from the one-off public key U_Nx) and compares it with the one inside the aggregated list since its existence is for doing the verification. Meanwhile, the receiver can verify a trust level of Nx based at least in part on the existence and position of the integrated trust value hash regarding Nx in the aggregated list. In case of multiple APs, the aggregated lists signed by the multiple APs can be combined optionally in the process of AggregateSignature according to an exemplary embodiment, in order to achieve efficient verification.

Once the genuineness of the trust value from the received message is confirmed by the receiver according to the aggregated list of integrated trust values, the receiver undergoes verification of a signature for the corresponding one-off public key. The authentication of the signature in the message can be carried out by using the one-off public key of the sender attached in the message. For example, using system public parameters such as {G1, G2, q, P} assigned by the TS and network credentials such as {s, Q} provided by the AP, the receiver can verify the signature of the sender. In other words, the process of Verification can verify that the trustworthiness of the sender is certified by the AP (such as the TS or a PSN node) and that the received message is from the sender which signed the message. In another exemplary embodiment, batch verification can be supported at the receiver. In this case, distinct messages from multiple nodes can be collectively verified by the receiver, which may be supported by the bilinear maps. Thus, the performance of trust authentication and signature verification can be greatly improved.

An exemplary procedure of anonymous authentication on trust between PSN nodes (such as Node 1 and Node x) is illustrated here in combination with Fig.5, where there is only one AP in the system, which is performed by a TS. During the system initiation, the TS may generate system credentials (such as PK, a public/private key pair like PK_TS and SK_TS of the TS), as described with respect to the process of SystemSetup. A plurality of nodes wishing to participate in PSN, shown in Fig.5 as Node 1, Node 2, Node x and so on, may register into the system, for example, by requesting the TS for registration with their unique identifiers (such as N1, N2, Nx and so on). In this case, the TS can register a node by generating a long-term public/private key pair (such as {PK_N1, SK_N1}, {PK_N2, SK_N2}, {PK_Nx, SK_Nx} or the like), and issue the long-term public/private key pair, one or more system credentials (such as PK, PK_TS and so on), and a certificate of the long-term public key (such as Cert_PK_N1, Cert_PK_N2, Cert_PK_Nx or the like) to the node in a secure way. In an exemplary embodiment, the PSN nodes, such as Node 1 and Node x, may interact with each other for instant or online social communications. Then Node 1 and Node x could request the TS for their respective trust evaluations for an anonymous and trustworthy authentication. Alternatively or additionally, the TS can check the validity period of the previously issued trust evaluation in order to decide if it is needed to conduct a new trust evaluation. If needed, the TS generates a new trust evaluation (such as an integrated trust value h(TV_Nx, AC_TV_Nx)) according to a unique real ID of a node (such as Nx), for example in the process of IssueTrustValueByTS. By setting and utilizing a validity period of an integrated trust value, the TS can append new values at the right positions in the integrated trust value list and remove invalid ones from the trust value list, for example in the process of TrustValueListUpdate. Accordingly, the TS can generate a signed hash of all valid integrated trust values in the process of AggregateListofTrustValue1. As such, the TS issues trust information comprising for example the corresponding new integrated trust value (such as h(TV_N1, AC_TV_N1), h(TV_N2, AC_TV_N2), h(TV_Nx, AC_TV_Nx) or the like) and the related parameters (such as s, Q and/or the like), to the respective nodes (for example, by applying a session key). The TS also distributes or broadcasts the aggregated list of integrated trust values (for example, in a form of {H_aggr_TS ∥ Sign_SK_TS(H_aggr_TS)}) to all PSN nodes in a secure way without disclosing the node real IDs. Alternatively or additionally, the TS may distribute or broadcast the aggregated list of integrated trust values periodically and/or when the aggregated list is updated. When getting the new integrated trust value, the PSN node may generate its one-off public/private key pair in the process of One-OffKeyPairGenerationl, based at least in part on the new integrated trust value issued by the TS. With the one-off public/private key pair, the node (such as Node 1 and Node x) can sign its message (such as M1 and Mx) in the process of SignatureGeneration, and authenticate a message from another node by anonymously verifying the corresponding trust value and the validity of a message signature. Optionally, the node can generate, in the process of One-OffKeyPairGenerationl for a next message, a distinct one-off public/private key pair for anonymous PSN communications and authentications on trust.

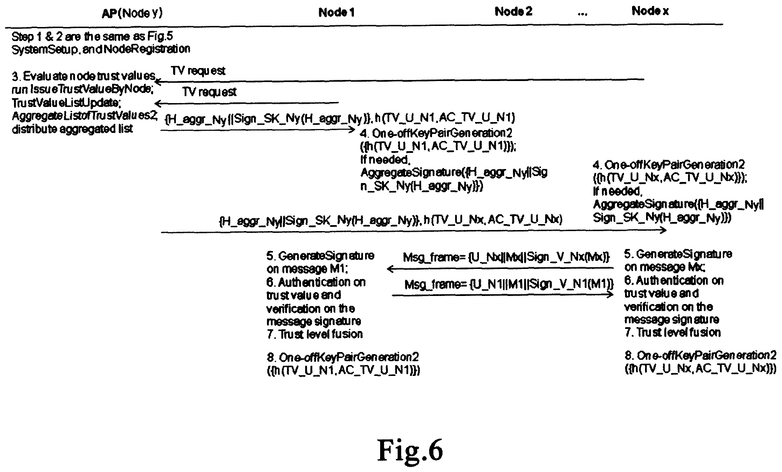

An exemplary procedure of anonymous authentication on trust between PSN nodes (such as Node 1 and Node x) is illustrated here in combination with Fig.6, where there are multiple APs in the system, which are performed by PSN nodes. Similar to the processes of SystemSetup and NodeRegistration described in Fig.5, the TS may generate system credentials during the system initiation. For a PSN node requesting the TS for registration with its unique ID (such as N1, N2, Nx and so on), the TS can issue a long-term public/private key pair, one or more system credentials, and a certificate of the long-term public key to the node in a secure way. In an exemplary embodiment, Node 1 and Node x could request an AP (such as Node y) for their respective trust evaluations for an anonymous and trustworthy authentication. Alternatively or additionally, the AP (also denoted as Ny for the case that the AP is played by a PSN node) can check the validity period of the previously issued trust evaluation in order to decide if it is needed to conduct a new trust evaluation. If needed, Ny generates a new trust evaluation (such as an integrated trust value h(TV_U_Nx, AC_TV_U_Nx)) according to a temporary identifier (such as a one-off public key) of a node, for example in the process of IssueTrustValueByNode. By setting and utilizing a validity period of an integrated trust value, Ny can append new values at the right positions in the integrated trust value list and remove invalid ones from the integrated trust value list, for example in the process of TrustValueListUpdate. Accordingly, Ny can generate signed hashes of all valid integrated trust values in the process of AggregateListofTrustValue2. As such, Ny issues trust information comprising for example the corresponding new integrated trust value (such as h(TV_U_N1, AC_TV_U_N1), h(TV_U_Nx, AC_TV_U_Nx) or the like) and the related parameters (such as s_Ny, Q' and/or the like), to the respective nodes (for example, by applying a session key). Ny also distributes or broadcasts the aggregated list of integrated trust values (for example, in a form of {H_aggr_Ny ‖ Sign_SK_Ny(H_aggr_Ny)}) to all PSN nodes in a secure way. Alternatively or additionally, Ny may distribute or broadcast the aggregated list of integrated trust values periodically and/or when the aggregated list is updated.

In an exemplary embodiment, when getting the new integrated trust values from multiple APs such as Ny, the PSN node may generate its one-off public/private key pair in the process of One-OffKeyPairGeneration2, based at least in part on the new integrated trust values issued by the multiple APs. On the other hand, if needed due to efficiency improvement, a set of aggregated lists of integrated trust values obtained at the node from the multiple APs, such as {H_aggr_Ny ‖ Sign_SK_Ny(H_aggr_Ny)}, can be combined in the process of AggregateSignature to generate an aggregated signature for the lists. With the one-off public/private key pair, the node (such as Node 1 and Node x) can sign its message (such as M1 and Mx) in the process of SignatureGeneration. The message receiver node can authenticate a message from another node by anonymously verifying the corresponding trust values issued by the APs and the validity of a message signature. In an exemplary embodiment, the message receiver node can get a trust level of a node according to the existence and position of its trust value in the aggregated list, then analyze the trust evaluation results from different APs, fuse or aggregate them together and make a decision accordingly. Optionally, the node can generate, in the process of One-OffKeyPairGeneration2 for a next message, a distinct one-off public/private key pair for anonymous PSN communications and authentications on trust.

In another exemplary embodiment, when getting the new integrated trust values from multiple APs such as Ny, the PSN node may generate a pair of one-off public/private keys in the process of One-OffKeyPairGenerationl, based at least in part on the new integrated trust value issued by each of the multiple APs. In this way, the node can generate the same number of one-off public/private key pairs as the number of the APs. Optionally, the node can generate a distinct one-off public/private key pair in the process of One-offKeyPairGenerationl with respect to each AP issued integrated trust value, for anonymous PSN communications and authentications on trust regarding a next message. The node can sign its message with each pair of one-off public/private keys in the process of SignatureGeneration, and then aggregate these signatures in the process of AggregateSignature. The message receiver node can authenticate a message from another node by anonymously verifying the corresponding trust values issued by the APs and the validity of a message signature. In an exemplary embodiment, the message receiver node can get a trust level of a node according to the existence and position of its trust value in the aggregated list, then analyze the trust evaluation results from different APs, fuse or aggregate them together and make a decision accordingly.

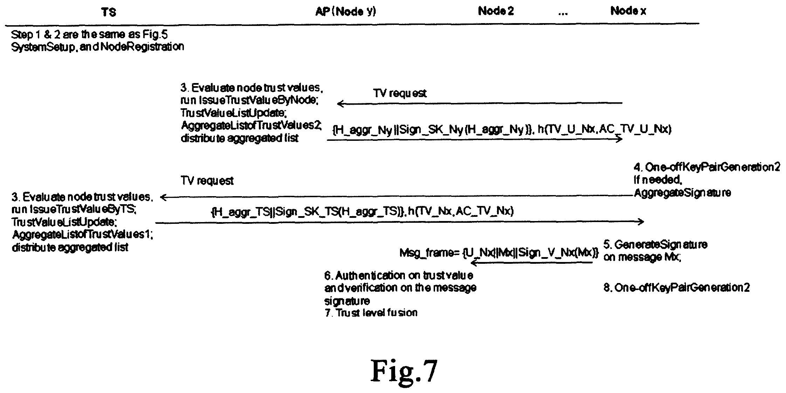

An exemplary procedure of anonymous authentication on trust between PSN nodes (such as Node 1 and Node x) is illustrated here in combination with Fig.7, where there are multiple APs in the system, which are performed by both TS and PSN nodes. Similar to the processes of SystemSetup and NodeRegistration described in Fig.5, the TS may generate system credentials during the system initiation. For a PSN node requesting the TS for registration with its unique identifier (such as N1, N2, Nx and so on), the TS can issue a long-term public/private key pair, one or more system credentials, and a certificate of the long-term public key to the node in a secure way. In an exemplary embodiment, Node 1 and Node x could request the AP (the TS or one or more APs such as Node y) for their respective trust evaluations for an anonymous and trustworthy authentication. Alternatively or additionally, the AP can check the validity period of the previously issued trust evaluation in order to decide if it is needed to conduct a new trust evaluation. If needed, the AP generates a new trust evaluation for the node. For example, the TS can generate a new integrated trust value (such as h(TV_Nx, AC_TV_Nx)) according to a unique real ID of the node (such as Nx) in the process of IssueTrustValueByTS, while Ny can generate a new integrated trust value (such as h(TV_U_Nx, AC_TV_U_Nx)) according to a temporary ID of a node (such as U_Nx of Nx) in the process of IssueTrustValueByNode. By setting and utilizing a validity period of an integrated trust value, the AP can append new values at the right positions in the integrated trust value list and remove invalid ones from the integrated trust value list, in the process of TrustValueListUpdate. Furthermore, the AP can generate signed hashes of all valid integrated trust values in the process of AggregateListofTrustValue, for example, AggregateListofTrustValue1 for the TS and AggregateListofTrustValue2 for Ny. As such, the AP issues trust information (which may comprise the corresponding new integrated trust value and the related parameters) to the respective nodes (for example, by applying a session key), and also distributes or broadcasts the aggregated list of integrated trust values to all PSN nodes in a secure way.

In an exemplary embodiment, when getting the new integrated trust values from multiple APs comprising at least the TS and Ny, the PSN node may generate its one-off public/private key pair in the process of One-OffKeyPairGeneration2, based at least in part on the new integrated trust values issued by the multiple APs. On the other hand, if needed due to efficiency improvement, a set of aggregated lists of integrated trust values obtained at the node from the multiple APs can be combined in the process of AggregateSignature to generate an aggregated signature for the lists. With the one-off public/private key pair, the node can sign its message in the process of SignatureGeneration. The message receiver node can authenticate a message from another node by anonymously verifying the corresponding trust values issued by the APs and the validity of a message signature. In an exemplary embodiment, the message receiver node can get a trust level of a node according to the existence and position of its trust value in the aggregated list, then analyze the trust evaluation results from different APs, fuse or aggregate them together and make a decision accordingly. Optionally, the node can generate, in the process of One-OffKeyPairGeneration2 for a next message, a distinct one-off public/private key pair for anonymous PSN communications and authentications on trust.

In another exemplary embodiment, when getting the new integrated trust values from multiple APs comprising at least the TS and Ny, the PSN node may generate a pair of one-off public/private keys in the process of One-offKeyPair-Generationl, based at least in part on the new integrated trust value issued by each of the multiple APs. In this way, the node can generate the same number of one-off public/private key pairs as the number of the APs. Optionally, the node can generate a distinct one-off public/private key pair in the process of One-OffKeyPairGenerationl with respect to each AP issued integrated trust value, for anonymous PSN communications and authentications on trust regarding a next message. The node can sign its message with each pair of one-off public/private keys in the process of SignatureGeneration, and then aggregate these signatures in the process of AggregateSignature. Similarly, the message receiver node can authenticate a message from another node by anonymously verifying the corresponding trust values issued by the APs and the validity of a message signature. In an exemplary embodiment, the message receiver node can get a trust level of a node according to the existence and position of its trust value in the aggregated list, then analyze the trust evaluation results from different APs, fuse or aggregate them together and make a decision accordingly.

According to an exemplary embodiment, the TS can conduct more accurate trust evaluations since it holds the real IDs of nodes. By cooperating with other APs (if any), it can issue an accurate trust value to a node. The initial trust value of the node may be issued by the TS at the node registration. Trust is evolved based at least in part on social behaviors and node identifiers. The TS can collect such information and perform trust evaluations by tracking the node IDs. In case that there are multiple APs in the system, the TS may contact other APs in order to figure out the original anonymous ID of a node and try to track its real ID at the TS. All the APs can cooperate with each other for trust evaluation without disclosing the real ID of a node by the TS. In the proposed solution, the trust level can be analyzed based at least in part on an anonymous authentication on trust value of a node and verification on its existence and position in the aggregated list. Particularly, if one AP only holds a right to issue a certain level of trust, the existence of an integrated trust value hash in the aggregated list distributed by this AP may indicate the trust level of a node. Since the integrated trust values may be arranged in the list in an order (for example, in an ascending or descending order), it is easy for a node to compare the trust levels of nodes during message authentication in PSN. It is assumed in an example that there are L aggregated lists in the system, and the integrated trust value issued for a node Nx is positioned at $P\_k\_Nx$ in list k, where the value of $P\_k\_Nx$ indicates a certain position in list k, and $P\_k\_Nx=0$ indicates that the integrated trust value issued for Nx cannot be found in list k. Thus, a simple way to estimate a trust level $TL\_Nx$ for the node Nx can be described as:

$$TL\_Nx = \sum_{k=1}^{L} P\_k\_Nx \qquad (5)$$

Many advantages can be obtained by the solution presented in accordance with the exemplary embodiments. For example, in an aspect of privacy preservation and anonymous authentication, the one-off public and private keys that are used for sending messages in PSN are generated from an integrated trust value by the AP, which has no trace of a long-term public key since this integrated trust value is unlinked to the real identity of a node. The integrated trust value for the node is generated by selecting an authentication code to make it unique and the node changes the random nonce each time when it generates the one-off key pair linked to the integrated trust value. The one-off key pair could be unique even for each message. With this way, the node privacy can be stringently preserved. In terms of anonymous trust authentication, the AP periodically broadcasts or distributes the aggregated list of hashed valid integrated trust values signed by its long-term private key to the PSN nodes. Therefore, a PSN node can trust a one-off public key, its linked trust value and validity period if the hash of the corresponding integrated trust value extracted from the one-off public key is present in at least one of the aggregated lists distributed by APs. Thus, the proposed scheme provides a secure yet anonymous and trustworthy authentication for social networking. In an aspect of unlinkability and traceability, any message recipient in PSN cannot link two or more messages sent from a node to other nodes if applying different one-off public keys (such as $U\_Nx$). Unlinkability of a message to its originator provides anonymity. On the other hand, the authority (such as TS or Ny) is able to trace the sender of the message by mapping the message's integrated trust value with the applied identity of the sender in case of any liability investigation. This especially works well for the TS. Therefore, the proposed solution preserves a conditional privacy, which is one of the acceptable and desired properties in PSN. If the AP is played by a PSN node, traceability is linked to $U\_Nx$, thus unconditional privacy can be achieved. Which level of traceability can be supported may be flexibly decided by the system. In practice, APs (comprising at least the TS and Ny) can cooperate with each other for issuing trust values in order to provide conditional traceability. In this case, each time when the node uses $U\_Nx$ to request a trust value from Ny, Ny will contact other APs comprising at least the TS in order to track the real node ID. But in this case, only the TS keeps the real node ID and would not disclose it. For example, the anonymity of the message originator and traceability by the AP may be assured as follows. A one-off anonymous public key of each node involved in sending messages is based at least in part on the integrated trust value issued by the AP. It is possible that the trust values of nodes can fall into the same trust level. But by fuzzifying the real trust value and applying an intensification code (if needed, the code can contain the AP's unique ID), the integrated trust value issued by the AP can be made unique to each node and at the same time it can be ensured that the fuzzy trust value is still in the same trust level as its real one. The one-off public key is computed at the node with a random number which would be changed by the node for every different message. This guarantees a unique one-off public key at each time of a PSN activity. Moreover, the integrated trust value of a node cannot be retrieved from its hash because of the irreversible property of one-way hash chains. Therefore, a receiver cannot link any two one-off public keys that are generated from the same integrated trust value. On the other hand, an identity disclosure could be performed only when solving a dispute at the TS based at least in part on the trust values issued by the TS. In case of any dispute concerning a message, the TS first fetches the integrated trust value hash in the accused message, in order to find the real integrated trust value of the message sender. Later, it extracts the long term public key of the responsible node. The TS then can find out the real ID of the node to sanction any penalties in view of legal considerations. In particular, the TS is required to be involved for crucial PSN communications, in order to guarantee node safety and at the same time preserve node privacy.

In an aspect of scalability and low overhead, a public key certificate is not required as the public keys can be authenticated from the aggregated list of integrated trust values distributed by the AP. This only requires an AP signature in the list to be verified once for different messages of multiple nodes. Therefore, verification overhead can be dramatically reduced by excluding the certificate verification for a PSN message, which improves the scalability of the system. The proposed solution also supports applying signature aggregation to combine a number of signatures signed by different private keys. Owing to such a signature aggregation on the up-to-date aggregated list of integrated trust values and on the message signatures signed by different one-off private keys generated from different integrated trust values issued by different APs, communication and storage costs can be largely reduced. This is especially attractive for mobile devices with resource restrictions like mobile phones and PDAs to extend battery life and for efficient super-distribution of certified trust values via MANET in PSN. The computation and communication overhead would not increase linearly with the number of messages in the PSN. It would not increase with the number of involved APs if applying signature aggregation. Therefore, the proposed solution is efficient in terms of small computation overhead and acceptable communication latency. According to an exemplary embodiment, the AP can be played by some fixed PSN nodes, such as base stations or access points. In an aspect of authentication of multiple APs, the proposed solution supports anonymous authentication on trust issued by the multiple APs, which may be either fixed or mobile, either centralized or distributed. Although the trust value is not disclosed, it is possible for a message receiver node to figure out its trust level according to the existence and position of its hashed value in the issued list. The node can thus analyze different trust evaluation results in order to make its own decision. For example, if all issued trust levels are high, then the node can assume that the node trust is high. In addition, the AP can only issue an integrated trust value for a node whose trust level is above a certain threshold. In this way, it is more convenient for a node to decide whether another node is trustworthy if it can authenticate the trust levels issued by more than one AP. That means more than one party proves the another node as trustworthy. Optionally, the proposed solution can allow APs to be set with different rights to issue different levels of trust, which can be specified by the TS's certificate on the APs. In this way, it is easy for the node to know the trust levels of other nodes. In an aspect of flexibility, the proposed solution can flexibly support anonymous authentication on trust in PSN in a centralized and/or a distributed way. Multiple APs can be deployed and implemented in many ways in practice, and they can execute either independently or cooperatively.

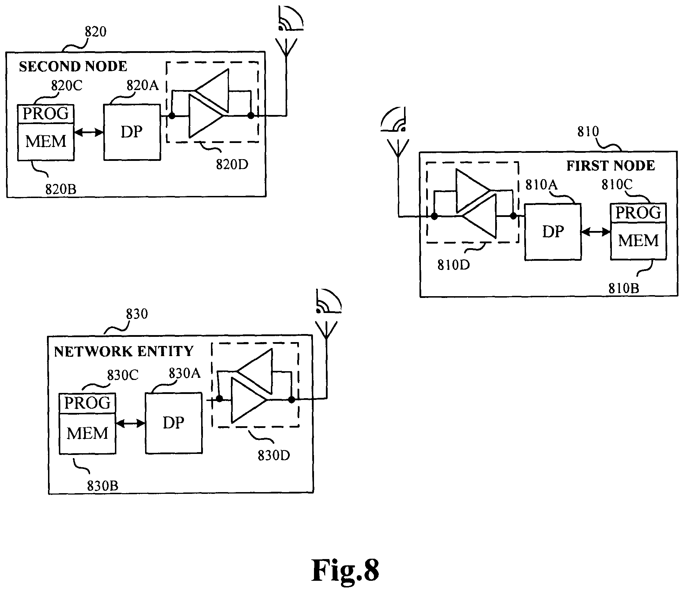

Fig.8 is a simplified block diagram of various apparatuses which are suitable for use in practicing exemplary embodiments of the present invention. In Fig.8, a network entity 830 (such as a TS or a node in social networking) may be authorized for social communications (such as PSN) participated by a plurality of nodes (such as a first node 810 and a second node 820). The first node 810 and the second node 820 (such as a mobile station, a user equipment, a wireless terminal, a PDA, a portable device, etc.) may be adapted for communicating with each other directly or through an intermediate entity (not shown in Fig.8). In an exemplary embodiment, the network entity 830 may comprise a data processor (DP) 830A, a memory (MEM) 830B that stores a program (PROG) 830C, and a suitable transceiver 830D for communicating with an apparatus such as another network entity, a communication node (such as the first node 810 and the second node 820), a server, a database and so on. The first node 810 may comprise a data processor (DP) 810A, a memory (MEM) 810B that stores a program (PROG) 810C, and a suitable transceiver 810D for communicating with an apparatus such as the second node 820, a network entity 830, a server, a database or other network devices (not shown in Fig.8). Similarly, the second node 820 may comprise a data processor (DP) 820A, a memory (MEM) 820B that stores a program (PROG) 820C, and a suitable transceiver 820D for communicating with an apparatus such as the first node 810, the network entity 830 or other network devices (not shown in Fig.8). For example, at least one of the transceivers 810D, 820D, 830D may be an integrated component for transmitting and/or receiving signals and messages.

Alternatively, at least one of the transceivers 810D, 820D, 830D may comprise separate components to support transmitting and receiving signals/messages, respectively. The respective DPs 810A, 820A and 830A may be used for processing these signals and messages.

Alternatively or additionally, the first node 810, the second node 820 and the network entity 830 may comprise various means and/or components for implementing functions of the foregoing steps and methods in Figs. 1-7. For example, the network entity 830 may comprise: issuing means for issuing trust information to a first node (such as the first node 810) from the network entity, wherein the trust information indicates a trust evaluation for the first node; distributing means for distributing a trust list to a plurality of nodes comprising at least the first node and a second node (such as the second node 820), wherein the trust list is associated with the trust evaluation for the first node, and the trust information and the trust list are used for an anonymous trust authentication between the first node and the second node. In an exemplary embodiment, the first node 810 may comprise: obtaining means for obtaining respective trust information from one or more network entities (such as the network entity 830), wherein the trust information from a corresponding network entity indicates a trust evaluation for the first node by the corresponding network entity; generating means for generating security information for the first node based at least in part on the respective trust information; and sending means for sending a message with authentication information to a second node (such as the second node 820) from the first node, wherein the authentication information is associated with the security information and used for an anonymous trust authentication between the first node and the second node. In another exemplary embodiment, the second node 820 may comprise: obtaining means for obtaining, from one or more network entities (such as the network entity 830), respective trust lists of which at least one trust list is associated with a trust evaluation for a first node (such as the first node 810); receiving means for receiving a message with authentication information at the second node from the first node, wherein the authentication information is associated with at least one trust evaluation for the first node; and performing means for performing an anonymous trust authentication between the first node and the second node based at least in part on the authentication information and the respective trust lists.

At least one of the PROGs 810C, 820C, 830C is assumed to comprise program instructions that, when executed by the associated DP, enable an apparatus to operate in accordance with the exemplary embodiments, as discussed above. That is, the exemplary embodiments of the present invention may be implemented at least in part by computer software executable by the DP 810A of the first node 810, by the DP 820A of the second node 820 and by the DP 830A of the network entity 830, or by hardware, or by a combination of software and hardware.

The MEMs 810B, 820B and 830B may be of any type suitable to the local technical environment and may be implemented using any suitable data storage technology, such as semiconductor based memory devices, flash memory, magnetic memory devices and systems, optical memory devices and systems, fixed memory and removable memory. The DPs 810A, 820A and 830A may be of any type suitable to the local technical environment, and may comprise one or more of general purpose computers, special purpose computers, microprocessors, digital signal processors (DSPs) and processors based on multi-core processor architectures, as non-limiting examples.

In general, the various exemplary embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the exemplary embodiments of this invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

It will be appreciated that at least some aspects of the exemplary embodiments of the inventions may be embodied in computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, random access memory (RAM), etc. As will be realized by one of skills in the art, the functionality of the program modules may be combined or distributed as desired in various embodiments. In addition, the functionality may be embodied in whole or in part in firmware or hardware equivalents such as integrated circuits, field programmable gate arrays (FPGA), and the like.

Although specific embodiments of the invention have been disclosed, those having ordinary skills in the art will understand that changes can be made to the specific embodiments without departing from the spirit and scope of the invention. The scope of the invention is not to be restricted therefore to the specific embodiments, and it is intended that the appended claims cover any and all such applications, modifications, and embodiments within the scope of the present invention.

**Claims**

1.  A method, comprising:

    issuing (102) trust information to a first node from among a plurality of nodes, from a network entity, wherein the trust information indicates a trust evaluation for the first node, and
    wherein the trust information and a trust list are used for an anonymous trust authentication between the first node and a second node from among the plurality of nodes,
    the plurality of nodes being registered in the network entity;
    distributing, (104) by the network entity, the trust list to the plurality of nodes comprising at least the first node and the second node, wherein the trust list is associated with the trust evaluation for the first node and a trust evaluation of the second node, the trust evaluations each being associated with an authentication code and a trust value, and
    the anonymous trust authentication being based on one-off pairs of public key and private key, the pairs being generated from the trust evaluation for the first node, wherein authenticity of the public key of the pairs is verified using the trust evaluations in the trust list.

2.  The method according to claim 1, wherein the network entity comprises: a trusted server, or a third node as an authorized party registered with the trusted server.

3.  The method according to claim 1, wherein the trust value of the first node is evaluated by the network entity independently, or by the network entity and one or more other network entities cooperatively.

4.  The method according to any one of claims 1 to 3, wherein the trust list comprises an aggregated list of trust evaluations certified by the network entity.

5.  The method according to claim 4, wherein the trust evaluations in the aggregated list are ordered based at least in part on trust values associated with the trust evaluations.

6.  The method according to claim 4 or 5, wherein the trust evaluations in the aggregated list are associated with trust values within a range specified for the network entity.

7.  A method, comprising:

    obtaining (202) respective trust information from a network entity, wherein the trust information from the network entity indicates a trust evaluation for a first node by the network entity, the trust evaluation comprising an authentication code and a trust value , and
    generating (204) security information for the first node based at least in part on the trust evaluation for the first node; and
    sending (206) a message with authentication information to a second node from the first node, the first and second nodes being registered in the network entity, wherein the authentication information is associated with the security information and used for an anonymous trust authentication between the first node and the second node,
    wherein the generated security information comprises a one-off pair of public key and private key; and wherein the trust evaluation is suitable for verifying authenticity of the public key of the pair.

8.  The method according to claim 7, wherein the network entity comprises: a trusted server, or at least one third node as an authorized party registered with the trusted server, or a combination thereof.

9.  The method according to claim 7, wherein the security information comprises multiple pairs of one-off public and private keys of the first node; and wherein the authentication information is associated with: the one-off public keys of the first node, and a signature aggregated from multiple signatures which are generated by using the one-off private keys of the first node.

10. An apparatus (830) comprising means for performing (830A, 830B. 830C, 830D) the method according to any of claims 1-6.

11. An apparatus (810) comprising means for performing (810A, 810B. 810C, 810D) the method according to any of claims 7-9.

**12.** A computer program which, when executed, causes the method of at least one of claims 1 to 6 to be performed.

**13.** A computer program which, when executed, causes the method of at least one of claims 7 to 9 to be performed.

**Patentansprüche**

**1.** Verfahren, umfassend:

Ausgeben (102) von Vertrauensinformationen an einen ersten Knoten aus einer Vielzahl von Knoten, von einer Netzwerkentität, wobei die Vertrauensinformationen eine Vertrauensbewertung für den ersten Knoten anzeigen, und

wobei die Vertrauensinformationen und eine Vertrauensliste für eine anonyme Vertrauensauthentifizierung zwischen dem ersten Knoten und einem zweiten Knoten aus der Vielzahl von Knoten verwendet werden, wobei die Vielzahl von Knoten bei der Netzwerkentität registriert sind;

Verteilen (104), durch die Netzwerkentität, der Vertrauensliste an die Vielzahl von Knoten, die zumindest den ersten Knoten und den zweiten Knoten umfasst, wobei die Vertrauensliste mit der Vertrauensbewertung für den ersten Knoten und einer Vertrauensbewertung des zweiten Knotens assoziiert ist,

wobei die Vertrauensbewertungen jeweils mit einem Authentifizierungscode und einem Vertrauenswert assoziiert sind, und

die anonyme Vertrauensauthentifizierung auf einmaligen Paaren eines öffentlichen Schlüssels und eines privaten Schlüssels beruht, wobei die Paare aus der Vertrauensbewertung für den ersten Knoten generiert werden, wobei die Authentizität des öffentlichen Schlüssels der Paare unter Verwendung der Vertrauensbewertungen in der Vertrauensliste verifiziert wird.

**2.** Verfahren nach Anspruch 1, wobei die Netzwerkentität umfasst: einen vertrauenswürdigen Server oder einen dritten Knoten als eine autorisierte Partei, die beim vertrauenswürdigen Server registriert ist.

**3.** Verfahren nach Anspruch 1, wobei der Vertrauenswert des ersten Knotens unabhängig durch die Netzwerkentität oder gemeinsam durch die Netzwerkentität und eine oder mehrere andere Netzwerkentitäten bewertet wird.

**4.** Verfahren nach einem der Ansprüche 1 bis 3, wobei die Vertrauensliste eine aggregierte Liste von Vertrauensbewertungen umfasst, die von der Netzwerkentität zertifiziert sind.

**5.** Verfahren nach Anspruch 4, wobei die Vertrauensbewertungen in der aggregierten Liste zumindest teilweise auf Grundlage von Vertrauenswerten gereiht sind, die mit den Vertrauensbewertungen assoziiert sind.

**6.** Verfahren nach Anspruch 4 oder 5, wobei die Vertrauensbewertungen in der aggregierten Liste mit den Vertrauenswerten innerhalb eines Bereichs assoziiert sind, der für die Netzwerkentität spezifiziert ist.

**7.** Verfahren, umfassend:

Erhalten (202) von jeweiligen Vertrauensinformationen von einer Netzwerkentität, wobei die Vertrauensinformationen von der Netzwerkentität eine Vertrauensbewertung für einen ersten Knoten durch die Netzwerkentität anzeigen, wobei die Vertrauensbewertung einen Authentifizierungscode und einen Vertrauenswert umfasst, und Generieren (204) von Sicherheitsinformationen für den ersten Knoten zumindest teilweise auf Grundlage der Vertrauensbewertung für den ersten Knoten; und

Senden (206) einer Nachricht mit Authentifizierungsinformationen vom ersten Knoten an einen zweiten Knoten, wobei der ersten und der zweiten Knoten bei der Netzwerkentität registriert sind, wobei die Authentifizierungsinformationen mit den Sicherheitsinformationen assoziiert sind und für eine anonyme Vertrauensauthentifizierung zwischen dem ersten Knoten und dem zweiten Knoten verwendet werden, wobei die generierten Sicherheitsinformationen ein einmaliges Paar aus einem öffentlichen Schlüssel und einem privaten Schlüssel umfassen; und wobei die Vertrauensauswertung zum Verifizieren der Authentizität des öffentlichen Schlüssels des Paars geeignet ist.

**8.** Verfahren nach Anspruch 7, wobei die Netzwerkentität umfasst: einen vertrauenswürdigen Server oder zumindest einen dritten Knoten als eine autorisierte Partei, die beim vertrauenswürdigen Server registriert ist, oder eine Kombination daraus.

**9.** Verfahren nach Anspruch 7, wobei die Sicherheitsinformationen mehrere Paare von einmaligen öffentlichen und privaten Schlüsseln des ersten Knotens umfassen; und wobei die Authentifizierungsinformationen assoziiert sind mit: den einmaligen öffentlichen Schlüsseln des ersten Knotens und einer Unterschrift, die aus mehreren Unterschriften aggregiert sind, die unter Verwendung der einmaligen privaten Schlüssel des ersten Knotens generiert sind.

**10.** Vorrichtung (830), die Mittel zum Durchführen (830A, 830B, 830C, 830D) des Verfahrens nach einem der Ansprüche 1-6 umfasst.

**11.** Vorrichtung (810), die Mittel zum Durchführen (810A, 810B, 810C, 810D) des Verfahrens nach einem der Ansprüche 7-9 umfasst.

**12.** Computerprogramm, das bewirkt, wenn es ausgeführt wird, dass das Verfahren nach mindestens einem der Ansprüche 1 bis 6 durchgeführt wird.

**13.** Computerprogramm, das bewirkt, wenn es ausgeführt wird, dass das Verfahren nach mindestens einem der Ansprüche 7 bis 9 durchgeführt wird.

## Revendications

**1.** Procédé, comprenant :

l'émission (102) d'informations de confiance à un premier noeud parmi une pluralité de noeuds, à partir d'une entité de réseau, dans lequel les informations de confiance indiquent une évaluation de confiance pour le premier noeud, et
dans lequel les informations de confiance et une liste de confiance sont utilisées pour une authentification de confiance anonyme entre le premier noeud et un deuxième noeud parmi la pluralité de noeuds,
la pluralité de noeuds étant enregistrés dans l'entité de réseau ;
la distribution, (104) par l'entité de réseau, de la liste de confiance à la pluralité de noeuds comprenant au moins le premier noeud et le deuxième noeud, dans lequel la liste de confiance est associée à l'évaluation de confiance pour le premier noeud et une évaluation de confiance du deuxième noeud, les évaluations de confiance étant chacune associée à un code d'authentification et une valeur de confiance, et
l'authentification de confiance anonyme étant sur la base de paires uniques de clef publique et de clef privée, les paires étant générées à partir de l'évaluation de confiance pour le premier noeud,
dans lequel l'authenticité de la clef publique des paires est vérifiée en utilisant les évaluations de confiance dans la liste de confiance.

**2.** Procédé selon la revendication 1, dans lequel l'entité de réseau comprend : un serveur de confiance, ou un troisième noeud en tant que partie autorisée enregistrée auprès du serveur de confiance.

**3.** Procédé selon la revendication 1, dans lequel la valeur de confiance du premier noeud est évaluée par l'entité de réseau indépendamment, ou par l'entité de réseau et une ou plusieurs autres entités de réseau de façon coopérative.

**4.** Procédé selon l'une quelconque des revendications 1 à 3, dans lequel la liste de confiance comprend une liste agrégée d'évaluations de confiance certifiées par l'entité de réseau.

**5.** Procédé selon la revendication 4, dans lequel les évaluations de confiance dans la liste agrégée sont mises en ordre sur la base au moins en partie de valeurs de confiance associées aux évaluations de confiance.

**6.** Procédé selon la revendication 4 ou 5, dans lequel les évaluations de confiance dans la liste agrégée sont associées à des valeurs de confiance au sein d'une gamme spécifiée pour l'entité de réseau.

**7.** Procédé, comprenant :

l'obtention (202) d'informations de confiance respectives à partir d'une entité de réseau, dans lequel les informations de confiance provenant de l'entité de réseau indiquent une évaluation de confiance pour un premier noeud par l'entité de réseau, l'évaluation de confiance comprenant un code d'authentification et une valeur de confiance, et

la génération (204) d'informations de sécurité pour le premier noeud sur la base au moins en partie de l'évaluation de confiance pour le premier noeud ; et

l'envoi (206) d'un message avec des informations d'authentification, à un deuxième noeud, à partir du premier noeud, les premier et deuxième noeuds étant enregistrés dans l'entité de réseau, dans lequel les informations d'authentification sont associées aux informations de sécurité et utilisées pour une authentification de confiance anonyme entre le premier noeud et le deuxième noeud,

dans lequel les informations de sécurité générées comprennent une paire unique de clef publique et de clef privée ; et dans lequel

l'évaluation de confiance est appropriée pour vérifier l'authenticité de la clef publique de la paire.

8. Procédé selon la revendication 7, dans lequel l'entité de réseau comprend : un serveur de confiance, ou au moins un troisième noeud en tant que partie autorisée enregistrée auprès du serveur de confiance, ou une association de ceux-ci.

9. Procédé selon la revendication 7, dans lequel les informations de sécurité comprennent de multiples paires de clefs publiques et de privées uniques du premier noeud ; et dans lequel les informations d'authentification sont associées à : les clefs uniques publiques du premier noeud, et une signature agrégée, à partir de multiples signatures qui sont générées en utilisant les clefs privées uniques du premier noeud.

10. Appareil (830) comprenant des moyens pour réaliser (830A, 830B, 830C, 830D) le procédé selon l'une quelconque des revendications 1 à 6.

11. Appareil (810) comprenant des moyens pour réaliser (810A, 810B, 810C, 810D) le procédé selon l'une quelconque des revendications 7-9.

12. Programme d'ordinateur qui, lorsqu'il est exécuté, fait en sorte que le procédé d'au moins une des revendications 1 à 6 soit réalisé.

13. Programme d'ordinateur qui, lorsqu'il est exécuté, fait en sorte que le procédé d'au moins une des revendications 7 à 9 soit réalisé.

Issue trust information to a first node from a
network entity, wherein the trust information
indicates a trust evaluation for the first node

102

Distribute a trust list to a plurality of nodes
comprising at least the first node and a second
node, wherein the trust list is associated with the
trust evaluation for the first node, and
the trust information and the trust list are used
for an anonymous trust authentication between
the first node and the second node

104

# Fig.1

Obtain respective trust information from one or more network entities, wherein the trust information from a corresponding network entity indicates a trust evaluation for a first node by the corresponding network entity

202

Generate security information for the first node based at least in part on the respective trust information

204

Send a message with authentication information to a second node from the first node, wherein the authentication information is associated with the security information and used for an anonymous trust authentication between the first node and the second node

206

# Fig.2

EP 3 017 562 B1

```
┌─────────────────────────────────────┐
│  Obtain, from one or more network    │      302
│  entities, respective trust lists    │
│  of which at least one               │
│  trust list is associated with a     │
│  trust evaluation                    │
│  for a first node                    │
└─────────────────────────────────────┘
                    │
                    ▼
┌─────────────────────────────────────┐
│  Receive a message with              │
│  authentication                      │      304
│  information at a second node from   │
│  the first                           │
│  node, wherein the authentication    │
│  information                         │
│  is associated with at least one     │
│  trust                               │
│  evaluation for the first node       │
└─────────────────────────────────────┘
                    │
                    ▼
┌─────────────────────────────────────┐
│  Perform an anonymous trust          │
│  authentication                      │      306
│  between the first node and the      │
│  second node                         │
│  based at least in part on the       │
│  authentication                      │
│  information and the respective      │
│  trust lists                         │
└─────────────────────────────────────┘
```

# Fig.3

**Node x**

**Authorized Party (Trusted Server or Node y)**

Communicator

| Trust Evaluator | Trust processor | Node Profile Manager |

Dataset

Pervasive Social Networker (authenticator)

Trust Issuer

Information Collector

Trust Evaluator

System Manager

Database

# Fig.4

| AP (TS) | Node 1 | Node 2 | ... | Node x |
|---|---|---|---|---|

1. SystemSetup, generate system credentials and a TS
   public and private key pair;

2. NodeRegistration:
   Issue a long-term
   public/private key pair
   and the certificate of the
   node public key to the
   node.

← N1 registration request

← N2 registration request

← Nx registration request

PK, PK_TS, PK_N1, SK_N1, Cert_PK_N1 →

PK, PK_TS, PK_N2, SK_N2, Cert_PK_N2 →

PK, PK_TS, PK_Nx, SK_Nx, Cert_PK_Nx →

3. Evaluate node trust values,
   run IssueTrustValueByTS;
   TrustValueListUpdate;
   AggregateListofTrustValues1;
   distribute aggregated list

← TV request

{H_aggr_TS||Sign_SK_TS(H_aggr_TS)}, h(TV_N1, AC_TV_N1) →

4. One-offKeyPairGeneration1
   (h(TV_N1, AC_TV_N1))

4. One-offKeyPairGeneration1
   (h(TV_Nx, AC_TV_Nx))

{H_aggr_TS||Sign_SK_TS(H_aggr_TS)}, h(TV_Nx, AC_TV_Nx) →

5. GenerateSignature
on message M1;
6. Authentication on
trust value and
verification on the
message signature

← Msg_frame= {U_Nx||Mx||Sign_V_Nx(Mx)}

Msg_frame= {U_N1||M1||Sign_V_N1(Mx)} →

5. GenerateSignature
on message Mx;
6. Authentication on
trust value and
verification on the
message signature and

7. One-offKeyPairGeneration1
(h(TV_N1, AC_TV_N1))

7. One-offKeyPairGeneration1
(h(TV_Nx, AC_TV_Nx))

# Fig.5

EP 3 017 562 B1

| AP(Node y) | Node 1 | Node 2 | ... | Node x |

Step 1 & 2 are the same as Fig.5
SystemSetup, and NodeRegistration

3. Evaluate node trust values,
run IssueTrustValueByNode;
TrustValueListUpdate;
AggregateListofTrustValues2,
distribute aggregated list

TV request

TV request

{H_aggr_Ny||Sign_SK_Ny(H_aggr_Ny)}, h(TV_U_N1,AC_TV_U_N1)

4. One-offKeyPairGeneration2
({h(TV_U_N1,AC_TV_U_N1)});
If needed,
AggregateSignature({H_aggr_Ny||Sig
n_SK_Ny(H_aggr_Ny)})

4. One-offKeyPairGeneration2
({h(TV_U_Nx,AC_TV_U_Nx)});
If needed,
AggregateSignature({H_aggr_Ny||
Sign_SK_Ny(H_aggr_Ny)})

{H_aggr_Ny||Sign_SK_Ny(H_aggr_Ny)}, h(TV_U_Nx,AC_TV_U_Nx)

5. GenerateSignature
on message M1;
6. Authentication on
trust value and
verification on the
message signature
7. Trust level fusion

Msg_frame= {U_Nx||Mx||Sign_V_Nx(Mx)}

Msg_frame= {U_N1||M1||Sign_V_N1(M1)}

5. GenerateSignature
on message Mx;
6. Authentication on
trust value and
verification on the
message signature
7. Trust level fusion

8. One-offKeyPairGeneration2
({h(TV_U_N1,AC_TV_U_N1)})

8. One-offKeyPairGeneration2
({h(TV_U_Nx,AC_TV_U_Nx)})

# Fig.6

EP 3 017 562 B1

| TS | AP (Node y) | Node 2 | ... | Node x |
|---|---|---|---|---|

Step 1 & 2 are the same as Fig.5
SystemSetup, and NodeRegistration

3. Evaluate node trust values,
run IssueTrustValueByNode;
TrustValueListUpdate;
AggregateListofTrustValues2
distribute aggregated list

TV request

{H_aggr_Ny||Sign_SK_Ny(H_aggr_Ny)}, h(TV_U_Nx,AC_TV_U_Nx)

4. One-offKeyPairGeneration2
If needed,
AggregateSignature

TV request

3. Evaluate node trust values,
run IssueTrustValueByTS;
TrustValueListUpdate;
AggregateListofTrustValues1;
distribute aggregated list

{H_aggr_TS||Sign_SK_TS(H_aggr_TS)}, h(TV_Nx,AC_TV_Nx)

Msg_frame= {U_Nx||Mx||Sign_V_Nx(Mx)}

5. GenerateSignature
on message Mx;

6. Authentication on trust value
and verification on the message
signature
7. Trust level fusion

8. One-offKeyPairGeneration2

# Fig.7

**Fig.8**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHEN-WEI YU et al.** A Trust Evaluation Approach of P2P Nodes Based on Trust Computing. IEEE, 2010

- **XIAOLIANG WANG et al.** CST: P2P Anonymous Authentication System based on Collaboration Signature. IEEE, 2010